# EUROPEAN PATENT SPECIFICATION

(11) **EP 1 631 433 B1**
(45) Date of publication and mention of the grant of the patent: **25.07.2007**
(21) Application number: 04730609.7
(22) Date of filing: 30.04.2004
(51) Int. Cl.: B29C 45/17, B29D 12/02

(54) **PROCESS FOR MAKING AN EYEGLASS WITH A LIGHTENED FRAME**
VERFAHREN ZUR HERSTELLUNG EINES LEICHTGEWICHTEN BRILLENGESTELS
PROCEDE DE FABRICATION D'UNE MONTURE DE LUNETTES ALLEGEE

(30) Priority: 08.05.2003 IT BO20030283
(43) Date of publication of application: 08.03.2006
(73) Proprietor: TYPE 20 S.r.l., 28040 Varallo Pombia - Novara (IT)
(72) Inventor: DEL VECCHIO, Paola, I-32021 Agordo (IT)
(74) Representative: Fanzini, Valeriano
(86) International application number: PCT/IB2004/001329
(87) International publication number: WO 2004/099857

(56) References cited:
- FR-A- 2 053 615
- US-A- 3 740 124
- US-A- 4 932 772

## Description

### Technical field

The present invention relates to eye glasses, especially eye glasses suitable for sporting or similar uses, and to a process for making such eye glasses or portions of them.

### Background art

Eye glasses known up to the present time have a full and rather heavy frame which, besides being uncomfortable to wear, may under certain circumstances constitute a disadvantage because, for example, they sink and may be irrecoverably lost if they fall in water.

Further, the surface finish of known glasses, which are made by moulding a plastic material - such as nylon, for example - is not entirely satisfactory on account of rough edges and other imperfections which make it impossible to use the mould to best advantage.

Moreover, in known eye glasses, the shrinkage of the material after moulding produces small unwanted surface bulges which are very unattractive. WO-A-9 956 942 and FR-A-2 754 757 describe making eye glasses using injection moulding.

### Summary of the invention

The invention provides a process for making eye glasses where at least one portion of the eye glass mounting frame is made from a suitable material, especially plastic, and preferably rigid or semi-rigid plastic; the process involves making at least one internal cavity in said portion of the eye glasses according to claim 1.

It is therefore possible to make eye glasses with a very light frame.

### Brief description of the drawings

The technical characteristics and advantageous aspects of the invention are apparent from the detailed description which follows, with reference to the accompanying drawings, which illustrate preferred embodiments of the invention provided merely by way of example without restricting the scope of the inventive concept, and in which:
- Figure 1 is a front view of a first embodiment of eye glasses made using the process according to the present invention;
- Figure 2 is a perspective side view of the front of the eye glasses according to the first embodiment of the present invention;
- Figure 3 is an enlarged cross section through line III-III in Figure 1;
- Figure 4 is a front view of a second embodiment of eye glasses made using the process according to the present invention;
- Figure 5 is a side view of the eye glasses made according to the second preferred embodiment of the present invention;
- Figure 6 is a perspective view of the eye glasses according to the second preferred embodiment of the invention, complete with sidepieces and nose pads;
- Figure 7 is a cross section, through line VII-VII of Figure 4, showing the bridge area at the front of the frame in the second preferred embodiment of the eye glasses according to the invention.

### Description of the preferred embodiments of the invention

In the process for manufacturing eye glasses according to the present invention, a portion of the eye glass frame is made by injection moulding and has at least one hollow area or cavity filled with a gas.

More specifically, the gas filled hollow area or cavity in the eye glass frame is made by injecting the gas at a predetermined pressure into the material of which the eye glass frame is made while the material is still in a fluid state inside the mould.

Advantageously, in the process according to the present invention, the gas used to make the hollow area or cavity in the eye glass frame is nitrogen. However, other gases might also be used without departing from the scope of the inventive concept.

The' gas under pressure inside the cavity in the eye glasses makes it possible not only to reduce the weight of the eye glass frame he eye glasses lighter but also to produce a frame whose cross section offers good rigidity and resistance. Moreover, eye glasses made according to the invention have better elastic properties compared to prior art glasses made from the same material.

With reference to the accompanying drawings, the numeral 10 denotes in their entirety eye glasses made according to the first preferred embodiment of the invention.

As illustrated, the eye glasses 10 comprise a frame for mounting a first and a second lens 12 and 14, and a frame front portion 16 made, for example, of nylon and consisting of a first and a second eyepiece portion 11 and 13, connected by a bridge 15.

The eye glasses further comprise sidepieces made of the same material, labelled 17 and 19 and illustrated schematically with dashed lines in the accompanying drawings.

The reference numerals 21 and 23 denote nose pads, also illustrated schematically with dashed lines, mounted on corresponding protuberances 25, 27 on the front frame portion extending from the inside edge of respective eyepieces towards the wearer's face. The protuberances 25 and 27 comprise means for attaching the nose pads and consisting, more specifically, of corresponding pad arms 31 and 33.

As illustrated, the eye glass frame comprises a hollow area 18 defining a cavity 20 filled with the gas.

As illustrated, the hollow area or cavity 20 for holding the gas inside the eye glass frame consists of a lengthwise duct extending circumferentially around the eyepieces of the frame front portion.

The gas is injected through a central point 24 at the nose pad 13 and spreads uniformly in the bridge and eyepieces of the eye glasses, creating a closed perimetric duct or channel. After injecting the nitrogen, the filling point 24 is sealed.

As illustrated, the lengthwise duct has a portion 22a that extends advantageously in the top part of the eyepiece, along respective branches 20a and 20b, and a portion 22b extending along the inside of the eyepiece, that is to say, along the side facing the other eyepiece.

The lengthwise duct might also extend along the bottom and outer portions of the eyepiece, thus running right around each eyepiece portion of the frame. '

Advantageously, the cross section size of the gas filled duct or area 22 at any one point may be made to depend on the cross section size of the eye glass frame at that point.

In practice, where the eye glass frame widens, so the duct section widens accordingly, as in the parts 22c at the sides of the frame where the sidepieces are connected.

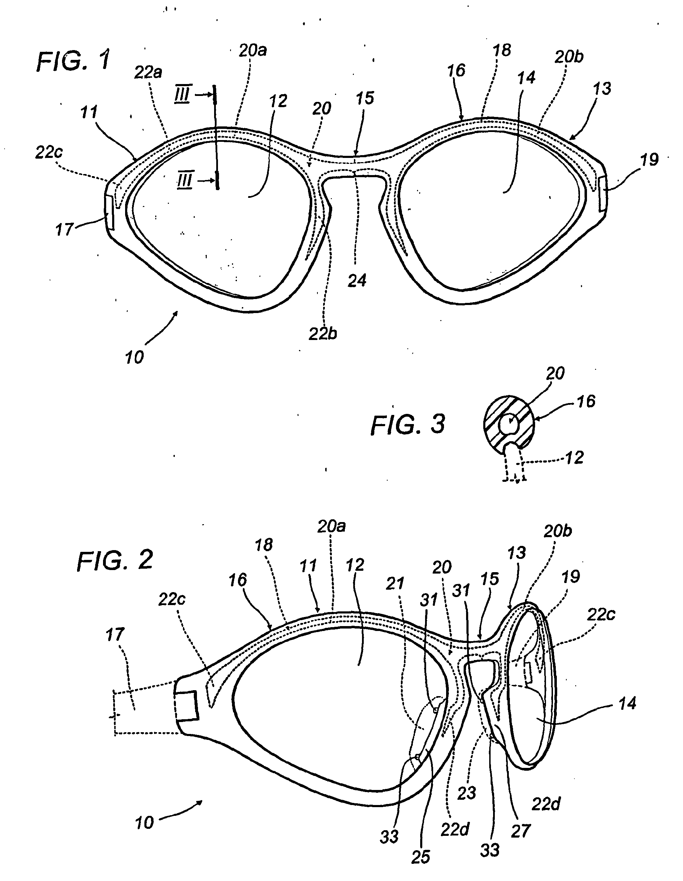

More specifically, as clearly illustrated in Figure 2, the eye glasses might be made even lighter by extending the gas-filled duct into the protuberances 25 and 27, each mounting a respective nose pad, thus creating a gas-filled duct with a section 22d whose direction changes sharply compared to the rest of the duct which follows the general shape of the frame.

To avoid excessively weakening the eye glass frame, the duct might be made only in the parts of it having a predetermined minimum cross section size.

Although not specifically illustrated, the front frame portion might comprise a plurality of separate hollow areas or cavities containing gas. The separate hollow areas or cavities for the filler gas might also be made inside the sidepieces or other parts of the eye glass frame.

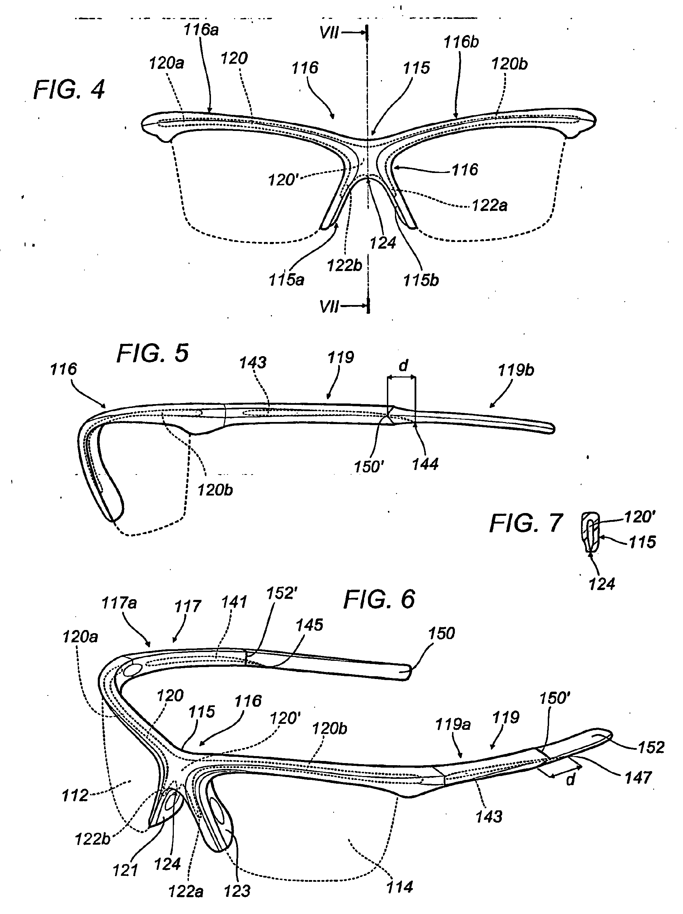

A second embodiment of the eye glasses made using the process according to the invention is illustrated in Figures 4 to 7. In this second embodiment, too, the eye glasses comprise a mounting frame with portions 116, 117, 119 made of a suitable material, preferably rigid or semi-rigid plastic (and more specifically, nylon), which have respective internal cavities, labelled 120, 141, 143, respectively.

- In this second embodiment, too, the internal cavity 120, 141, 143 is made in the respective eye glass portion 116, 117, 119, by injecting into the eye glass portion 116, 117, 119 a filler gas, which preferably consists of or comprises nitrogen, at a predetermined pressure during the hot moulding of the plastic material to make the eye glass portion 116, 117, 119.

In addition, according to another advantageous aspect of the second preferred embodiment, once the hollow area has been made in the eye glass portion 116, 117, 119, the gas is allowed to escape from the portion 116, 117, 119 and the opening 124, 144 through which the gas was filled into the eye glass portion 116, 117, 119 is sealed.

More specifically, the opening 124, 144 for injecting the gas into the eye glass portion 116, 117, 119 is sealed by heating the material of which the portion 116, 117, 119 is made after the eye glass frame has been removed from the mould.

In this second embodiment, too, the internal cavity has the shape of a lengthwise duct 120, 141, 143 as shown in the accompanying drawings.

Looking in more detail with reference to the drawings, one portion 116 of the eye glasses with lightened frame is constituted by the front of the frame which mounts a first and a second lens 112, 114, drawn with dashed lines.

More specifically, the lengthwise duct 120 is made in the top section of the eye glass frame front 116 and extends in the part of the frame front 116 where the nose pads 121, 123 are located.

Advantageously, the internal cavity 120 extends from a point half way along the respective eye glass portion 116, that is to say, from the midpoint of the respective eye glass portion 116.

In an especially advantageous manner, the internal cavity 120 extends from the lower surface of the bridge 115 of the eye glass frame front portion 116.

As illustrated in the accompanying drawings, the internal cavity 120 thus advantageously extends along two branch channels 120a, 120b following substantially opposite directions.

A further advantageous aspect lies in the fact that the internal cavity 120 extends along the full width and height of the connecting bridge 115. In practice, that means an internal chamber 120' that is substantially the same size as the connecting bridge 115 is formed.

Thus, the internal cavity 120 in the front of the eye glass frame comprises a wide chamber 120' just downstream of the injection point opening 124, from which there extend a plurality of channels 120a, 120b, 122a, 122b in the directions of respective branches 116a, 116b, 115a, 115b of the eye glass portion 116, the channels 120a, 120b extending in directions substantially transversal and the channels ' 122a, 122b in directions substantially perpendicular to the eye glass front portion.

Advantageously, the method for making the internal cavity according to the invention thus produces a cavity with a first and a second branch channel 122a, 122b extending in a direction substantially opposite the direction in which the gas is injected into the eye glass portion, and, more specifically, extending in the area 115a, 115b, of the eye glass frame front 116 where the *nose pads* 121, 123 are located.

As illustrated, according to another aspect, the eye glass portion comprises respective sidepieces 117, 119 of the eye glass frame.

The internal cavities 141, 143 in the eye glass sidepieces extend from an intermediate point of the sidepieces 117, 119, located in an end area 119a to be coated with suitable material 150, 152 for contact with the wearer's head or ears and extending towards the area of connection to the front portion of the eye glass frame.

As illustrated, the injection point 145, 147, which is situated in an end area 119a to be coated, is separated from the intermediate end 150', 152' of the area to be coated by a gap (d) such that the channel in the corresponding non-coated sidepiece portion 119a can extend in a direction that is substantially parallel to the direction in which the portion 117a, 119a itself extends.

More specifically, the internal cavity extends, as illustrated, from a point located in an area 119b where the cross section of the sidepiece is reduced or narrower than the cross section at the front 119a of the sidepiece.

The material of which the eye glass frame is made, that is to say, which constitutes the front portion and/or the sidepieces of the frame, may be opaque or transparent and, in the latter case, the respective internal cavities are clearly visible and produce an attractive effect.

According to another advantageous aspect, the inside surface defining the internal cavity may be coloured or otherwise suitably treated, thus highlighting the cavity when the respective portion of the eye glass frame is made from a transparent material.

The invention therefore provides an eye glass frame which is very light but whose mechanical strength is not significantly reduced.

One advantage of the eye glasses made according to the invention is that they may be more easily recovered from water because they float. Thus, there is no longer the risk of the wearer irrecoverably losing the eye glasses if they fall into the water.

Furthermore, the use of a gas injected under pressure into the eye glass frame makes it possible to improve eye glass finish, Producing a surface that is smoother and free of rough edges and irregularities.

According to another advantageous aspect, the areas in which gas is injected under pressure into the eye glass frame reduce the effect of plastic shrinkage which, in eye glasses made of nylon for example, produces unwanted surfaces bulges.

## Claims

1. A process for making eye glasses by not molding where at least one portion (16, 116, 117, 119) of the eye glass mounting frame is made from a suitable material, especially plastic, and preferably rigid or semi-rigid plastic; the process involves making at least one cavity (20, 120, 141, 143) in said portion (16, 116, 117, 119) of the eye glasses and it being **characterised in that** the cavity (20, 120, 141, 143) is made in the eye glass portion (16, 116, 117, 119) by injecting a filler gas into the material of which the eye glass portion (16, 116, 117, 119) is made; and **in that** the filler gas is injected into the eye glass portion (16, 116, 11'7, 119) during the hot moulding of the eye glass portion (16, 116, 117, 119) itself.

2. The process according to claim 1, **characterised in that** the gas comprises nitrogen.

3. The process according to any of the foregoing claims, **characterised in that** the gas is injected into the eye glass portion (16, 116, 117, 119) at a predetermined pressure.

4. The process according to any of the foregoing claims, **characterised in that** once the internal cavity has been made in the eye glass portion (16, 116, 117, 119), the gas is allowed to escape from the portion (16, 116, 117, 119).

5. The process according to any of the foregoing claims, **characterised in that** the opening (24, 124, 144) through which the filler gas is injected into the eye glass portion (16, 116, 117, 119) is sealed.

6. The process according to claim 5, **characterised in that** the opening (24, 124, 144) through which the filler gas is injected into the eye glass portion (16, 116, 117, 119) is sealed by heating the material of which the portion (16, 116, 117, 119) is made.

7. The process according to any of the foregoing claims, **characterised in that** the internal cavity (20, 120, 141, 143) is made in a portion (16, 116, 117, 119) of the eye glass frame with a predetermined minimum cross section size.

8. The process according to any of the foregoing claims, **characterised in that** the internal cavity (20) has a variable cross section size.

9. The process according to claim 8, **characterised in that** the internal cavity (20, 22d) at any one point has a cross section size that depends on the cross section size of the eye glass frame at that point.

10. The process according to any of the foregoing claims, **characterised in that** the eye glass portion (16, 116, 117, 119) is constituted by the front of the frame which mounts a first and a second lens (12, 14, 112, 114).

11. The process according to any of the foregoing claims, **characterised in that** the internal cavity is made in the form of a lengthwise duct (20, 120, 141, 143).

12. The process according to any of the foregoing claims, **characterised in that** the internal cavity (20, 120) has at least a first and a second branch channel (20a, 20b, 120a, 120b) extending in substantially opposite directions.

13. The process according to any of the foregoing claims, **characterised in that** the internal cavity (20, 120) is made in the top section of the eye glass frame front (16, 116).

14. The process according to any of the foregoing claims, **characterised in that** the internal cavity is made in the lower section of the frame front.

15. The process according to any of the foregoing claims, **characterised in that** the internal cavity is made to extend right around each respective eyepiece of the front of the frame.

16. The process according to any of the foregoing claims, **characterised in that** the internal cavity (22b, 122b) is made in the part of the eye glass frame front (16, 116) where the nose pads (21, 23, 121, 123) are located.

17. The process according to any of the foregoing claims, **characterised in that** the internal cavity (20, 120) is made to extend from an intermediate point of the respective eye glass portion (16, 116, 117, 119).

18. The process according to any of the foregoing claims, **characterised in that** the internal cavity (20, 120) is made to extend from a midpoint of the respective eye glass portion (16, 116, 117, 119).

19. The process according to any of the foregoing claims, **characterised in that** the internal cavity (20, 120) is made to extend from the bridge (15, 115) of the front portion (16, 116) of the eye glasses.

20. The process according to any of the foregoing claims, **characterised in that** the internal cavity (20, 120) is made to extend from the lower surface of the bridge (15, 115) of the front portion (16, 116) of the eye glasses.

21. The process according to any of the foregoing claims, **characterised in that** the internal cavity (20, 120) is made to extend in at least two substantially opposite directions (20a, 20b, 120a, 120b).

22. The process according to any of the foregoing claims, **characterised in that** the internal cavity (20, 120) is made to extend substantially along the full width of the connecting bridge (15, 115).

23. The process according to any of the foregoing claims, **characterised in that** the internal cavity (20, 120) is made to extend substantially along the full height of the connecting bridge (15, 115).

24. The process according to any of the foregoing claims, **characterised in that** the internal cavity (20, 120) is substantially the same size as the connecting bridge (15, 115).

25. The process according to any of the foregoing claims, **characterised in that** the internal cavity (120) comprises a wide chamber (120') situated just downstream of the injection point opening (124).

26. The process according to any of the foregoing claims, **characterised in that** the internal cavity (120) comprises a large chamber (120').

27. The process according to any of the foregoing claims, **characterised in that** the internal cavity (120) comprises a central chamber (120') from which there extend a plurality of channels (120a, 120b, 122a, 122b) in the directions of respective branches (116a, 116b, 115a, 115b) of the eye glass portion (116).

28. The process according to any of the foregoing claims, **characterised in that** the internal cavity (120) comprises a central chamber (120') from which there extend a plurality of channels (120a, 120b, 122a, 122b), the channels (120a, 120b) in a direction transversal to, and the channels (122a, 122b) in a direction perpendicular to, the front eye glass portion.

29. The process according to any of the foregoing claims, **characterised in that** the internal cavity has at least one branch channel (122a, 122b) extending in a direction substantially opposite the direction in which the gas is injected into the eye glass portion.

30. The process according to any of the foregoing claims, **characterised in that** the eye glass portion comprises a sidepiece (117, 119) of the eye glass frame.

31. The process according to any of the foregoing claims, **characterised in that** the internal cavity (141, 143) is made to extend from an intermediate point of the sidepiece (117, 119).

32. The process according to any of the foregoing claims, **characterised in that** the internal cavity (141, 143) is made to extend from a point (145, 147) located in an end area (119a) to be coated with suitable material (150, 152) towards the area of connection to the front portion of the eye glass frame.

33. The process according to any of the foregoing claims, **characterised in that** the injection point (145, 147), which is situated in an end area (119b) to be coated, is separated from the end of the area to be coated by a gap (d) such that the channel can extend in a direction that is substantially parallel to the direction in which the corresponding portion (117a, 119a) extends.

34. The process according to any of the foregoing claims, **characterised in that** the internal cavity (143) is made to extend from a point in an area (119b) with a reduced or narrow cross section.

## Patentansprüche

1. Verfahren zur Herstellung einer Brille durch Warmformen, bei dem mindestens ein Abschnitt (16, 116, 117, 119) des Brillengestells aus einem geeigneten Material gefertigt wird, insbesondere Kunststoff, und vorzugsweise steifem oder halbsteifem Kunststoff; wobei das Verfahren die Fertigung mindestens eines Hohlraumes (20, 120, 141, 143) in dem genannten Abschnitt (16, 116, 117, 119) der Brille vorsieht und **dadurch gekennzeichnet ist, dass** zur Fertigung des Hohlraumes (20, 120, 141, 143) in dem Brillenabschnitt (16, 116, 117, 119) ein Füllgas in das Material eingespritzt wird, aus dem der Brillenabschnitt (16, 116, 117, 119) hergestellt ist; und dass das Füllgas während des Warmformens Brillenabschnittes (16, 116, 117, 119) in selbigen Brillenabschnitt (16, 116, 117, 119) eingespritzt wird.

2. Verfahren nach Anspruch 1, **dadurch gekennzeichnet, dass** das Gas Stickstoff enthält.

3. Verfahren nach einem der vorhergehenden Ansprüche, **dadurch gekennzeichnet, dass** das Gas mit einem vorbestimmten Druck in den Brillenabschnitt (16, 116, 117, 119) eingespritzt wird.

4. Verfahren nach einem der vorhergehenden Ansprüche, **dadurch gekennzeichnet, dass** nach der Fertigung des inneren Hohlraumes in dem Brillenabschnitt (16, 116, 117, 119) das Gas aus dem Abschnitt (16, 116, 117, 119) entweichen kann.

5. Verfahren nach einem der vorhergehenden Ansprüche, **dadurch gekennzeichnet, dass** die Öffnung (24, 124, 144), durch die das Füllgas in den Brillenabschnitt (16, 116, 117, 119) eingespritzt wird, versiegelt wird.

6. Verfahren nach Anspruch 5, **dadurch gekennzeichnet, dass** die Öffnung (24, 124, 144), durch die das Füllgas in den Brillenabschnitt (16, 116, 117, 119) eingespritzt wird, durch Erhitzen des Materials, aus dem der Abschnitt (16, 116, 117, 119) hergestellt ist, versiegelt wird.

7. Verfahren nach einem der vorhergehenden Ansprüche, **dadurch gekennzeichnet, dass** der innere Hohlraum (20, 120, 141, 143) in einem Abschnitt (16, 116, 117, 119) des Brillengestells angefertigt wird, der ein vorbestimmtes Mindestquerschnittsmaß aufweist.

8. Verfahren nach einem der vorhergehenden Ansprüche, **dadurch gekennzeichnet, dass** der innere Hohlraum (20) ein variables Querschnittsmaß aufweist.

9. Verfahren nach Anspruch 8, **dadurch gekennzeichnet, dass** der innere Hohlraum (20, 22d) an jeder beliebigen Stelle ein Querschnittsmaß aufweist, das von dem Querschnittsmaß des Brillengestells an der betreffenden Stelle abhängig ist.

10. Verfahren nach einem der vorhergehenden Ansprüche, **dadurch gekennzeichnet, dass** der Brillenabschnitt (16, 116, 117, 119) durch das Vorderteil des Gestells gebildet wird, in dem eine erste und eine zweite Linse (12, 14, 112, 114) montiert sind.

11. Verfahren nach einem der vorhergehenden Ansprüche, **dadurch gekennzeichnet, dass** der innere Hohlraum in Form eines länglichen Gangs (20, 120, 141, 143) ausgeführt ist.

12. Verfahren nach einem der vorhergehenden Ansprüche, **dadurch gekennzeichnet, dass** der innere Hohlraum (20, 120) mindestens einen ersten und einen zweiten Zweigkanal (20a, 20b, 120a, 120b) aufweist, die sich in im Wesentlichen entgegengesetzten Richtungen erstrecken.

13. Verfahren nach einem der vorhergehenden Ansprüche, **dadurch gekennzeichnet, dass** der innere Hohlraum (20, 120) im oberen Abschnitt des Vorderteils des Brillengestells (16, 116) angefertigt ist.

14. Verfahren nach einem der vorhergehenden Ansprüche, **dadurch gekennzeichnet, dass** der innere Hohlraum im unteren Abschnitt des Vorderteils des Brillengestells angefertigt ist.

15. Verfahren nach einem der vorhergehenden Ansprüche, **dadurch gekennzeichnet, dass** der innere Hohlraum so angefertigt ist, dass er sich rund um die jeweilige Augenglasfassung des Vorderteils des Gestells erstreckt.

16. Verfahren nach einem der vorhergehenden Ansprüche, **dadurch gekennzeichnet, dass** der innere Hohlraum (22b, 122b) in dem Teil des Vorderteils (16, 116) des Brillengestells angefertigt ist, an dem die Nasenauflagepads (21, 23, 121, 123) angeordnet sind.

17. Verfahren nach einem der vorhergehenden Ansprüche, **dadurch gekennzeichnet, dass** der innere Hohlraum (20, 120) so angefertigt ist, dass er sich von einem zwischenliegenden Punkt des entsprechenden Brillenabschnittes (16, 116, 117, 119) aus erstreckt.

18. Verfahren nach einem der vorhergehenden Ansprüche, **dadurch gekennzeichnet, dass** der innere Hohlraum (20, 120) so angefertigt ist, dass er sich von einem Mittelpunkt des entsprechenden Brillenabschnittes (16, 116, 117, 119) aus erstreckt.

19. Verfahren nach einem der vorhergehenden Ansprüche, **dadurch gekennzeichnet, dass** der innere Hohlraum (20, 120) so angefertigt ist, dass er sich von dem Steg (15, 115) des vorderen Abschnittes (16, 116) der Brille aus erstreckt.

20. Verfahren nach einem der vorhergehenden Ansprüche, **dadurch gekennzeichnet, dass** der innere Hohlraum (20, 120) so angefertigt ist, dass er sich von der unteren Oberfläche des Stegs (15, 115) des vorderen Abschnittes (16, 116) der Brille aus erstreckt.

21. Verfahren nach einem der vorhergehenden Ansprüche, **dadurch gekennzeichnet, dass** der innere Hohlraum (20, 120) so angefertigt ist, dass er sich in mindestens zwei im Wesentlichen entgegengesetzten Richtungen (20a, 20b, 120a, 120b) erstreckt.

22. Verfahren nach einem der vorhergehenden Ansprüche, **dadurch gekennzeichnet, dass** der innere Hohlraum (20, 120) so angefertigt ist, dass er sich im Wesentlichen über die gesamte Breite des Verbindungsstegs (15, 115) erstreckt.

23. Verfahren nach einem der vorhergehenden Ansprüche, **dadurch gekennzeichnet, dass** der innere Hohlraum (20, 120) so angefertigt ist, dass er sich im Wesentlichen über die gesamte Höhe des Verbindungsstegs (15, 115) erstreckt.

24. Verfahren nach einem der vorhergehenden Ansprüche, **dadurch gekennzeichnet, dass** der innere Hohlraum (20, 120) im Wesentlichen die gleiche Größe aufweist wie der Verbindungssteg (15, 115).

25. Verfahren nach einem der vorhergehenden Ansprüche, **dadurch gekennzeichnet, dass** der innere Hohlraum (120) eine weite Kammer (120') umfasst, die direkt hinter der Einspritzöffnung (124) liegt.

26. Verfahren nach einem der vorhergehenden Ansprüche, **dadurch gekennzeichnet, dass** der innere Hohlraum (120) eine große Kammer (120') umfasst.

27. Verfahren nach einem der vorhergehenden Ansprüche, **dadurch gekennzeichnet, dass** der innere Hohlraum (120) eine zentrale Kammer (120') umfasst, von der aus sich mehrere Kanäle (120a, 120b, 122a, 122b) in Richtung entsprechender Zweige (116a, 116b, 115a, 115b) des Brillenabschnittes (116) erstrecken.

28. Verfahren nach einem der vorhergehenden Ansprüche, **dadurch gekennzeichnet, dass** der innere Hohlraum (120) eine zentrale Kammer (120') umfasst, von der aus sich mehrere Kanäle (120a, 120b, 122a, 122b) erstrecken, und zwar die Kanäle (120a, 120b) quer zum vorderen Brillenabschnitt und die Kanäle (122a, 122b) lotrecht zum vorderen Brillenabschnitt.

29. Verfahren nach einem der vorhergehenden Ansprüche, **dadurch gekennzeichnet, dass** der innere Hohlraum zumindest einen Zweigkanal (122a, 122b) aufweist, der sich in einer Richtung erstreckt, die im Wesentlichen entgegengesetzt zu der Richtung ist, mit der das Gas in den Brillenabschnitt eingespritzt wird.

30. Verfahren nach einem der vorhergehenden Ansprüche, **dadurch gekennzeichnet, dass** der Brillenabschnitt ein Seitenteil (117, 119) des Brillengestells beinhaltet.

31. Verfahren nach einem der vorhergehenden Ansprüche, **dadurch gekennzeichnet, dass** der innere Hohlraum (141, 143) so angefertigt ist, dass er sich von einem zwischenliegenden Punkt des Seitenteils (117, 119) aus erstreckt.

32. Verfahren nach einem der vorhergehenden Ansprüche, **dadurch gekennzeichnet, dass** der innere Hohlraum (141, 143) so angefertigt ist, dass er sich von einem Punkt (145, 147) aus erstreckt, der in einem Endbereich (119a) liegt, der mit geeignetem Material (150, 152) zu beschichten ist und zu dem Verbindungsbereich mit dem vordeme Abschnitt des Brillengestells hin liegt.

33. Verfahren nach einem der vorhergehenden Ansprüche, **dadurch gekennzeichnet, dass** die Einspritzstelle (145, 147), die in einem zu beschichtenden Endbereich (119b) liegt, von dem Ende des zu beschichtenden Bereichs durch einen Spalt (d) getrennt ist, so dass sich der Kanal in eine Richtung erstrecken kann, die im Wesentlichen parallel zu der Richtung ist, in der sich der entsprechende Abschnitt (117a, 119a) erstreckt.

34. Verfahren nach einem der vorhergehenden Ansprüche, **dadurch gekennzeichnet, dass** der innere Hohlraum (143) so angefertigt ist, dass er sich von einem Punkt aus erstreckt, der in einem Bereich (119b) mit verringertem oder schmalem Querschnitt liegt.

## Revendications

1. Un procédé de fabrication de lunettes par moulage à chaud où au moins une partie (16, 116, 117, 119) de la monture de lunettes est réalisée dans un matériau adéquat, notamment du plastique, et de préférence du plastique rigide ou semi-rigide ; le procédé prévoyant la réalisation d'au moins une cavité (20, 120, 141, 143) dans ladite partie (16, 116, 117, 119) des lunettes et étant **caractérisé en ce que** la cavité (20, 120, 141, 143) est réalisée dans la partie (16, 116, 117, 119) des lunettes par injection d'un gaz de remplissage dans le matériau de fabrication de ladite partie (16, 116, 117, 119) des lunettes ; et **en ce que** le gaz de remplissage est injecté dans la partie (16, 116, 117, 119) des lunettes pendant le moulage à chaud de la partie (16, 116, 117, 119) elle-même.

2. Le procédé selon la revendication 1, **caractérisé en ce que** le gaz en question comprend de l'azote.

3. Le procédé selon l'une quelconque des revendications précédentes, **caractérisé en ce que** le gaz est injecté dans la partie (16, 116, 117, 119) des lunettes à une pression prédéfinie.

4. Le procédé selon l'une quelconque des revendications précédentes, **caractérisé en ce que** le gaz est libéré de la partie (16, 116, 117, 119) après réalisation de la cavité intérieure dans cette même partie (16, 116, 117, 119) des lunettes.

5. Le procédé selon l'une quelconque des revendications précédentes, **caractérisé en ce que** l'ouverture (24, 124, 144) par laquelle le gaz de remplissage est injecté dans la partie (16, 116, 117, 119) des lunettes est fermée.

6. Le procédé selon la revendication 5, **caractérisé en ce que** l'ouverture (24, 124, 144) par laquelle le gaz de remplissage est injecté dans la partie (16, 116, 117, 119) des lunettes est fermée par chauffage du matériau de fabrication de cette même partie (16, 116, 117, 119).

7. Le procédé selon l'une quelconque des revendications précédentes, **caractérisé en ce que** la cavité intérieure (20, 120, 141, 143) est réalisée dans une partie (16, 116, 117, 119) de la monture de lunettes ayant une section minimum prédéfinie.

8. Le procédé selon l'une quelconque des revendications précédentes, **caractérisé en ce que** la cavité intérieure (20) a une section variable.

9. Le procédé selon la revendication 8, **caractérisé en ce que** la cavité intérieure (20, 22d) a, en un point quelconque, une section qui dépend de la taille de la section de la monture de lunettes en ce point.

10. Le procédé selon l'une quelconque des revendications précédentes, **caractérisé en ce que** la partie (16, 116, 117, 119) des lunettes est constituée par la partie frontale de la monture qui supporte un premier et un deuxième verres (12, 14, 112, 114).

11. Le procédé selon l'une quelconque des revendications précédentes, **caractérisé en ce que** la cavité intérieure est réalisée sous forme d'un conduit longitudinal (20, 120, 141, 143).

12. Le procédé selon l'une quelconque des revendications précédentes, **caractérisé en ce que** la cavité intérieure (20, 120) a au moins un premier et un deuxième canaux de ramification (20a, 20b, 120a, 120b) qui se développent dans des directions essentiellement opposées.

13. Le procédé selon l'une quelconque des revendications précédentes, **caractérisé en ce que** la cavité intérieure (20, 120) est réalisée dans la partie supérieure de la partie frontale (16, 116) de la monture de lunettes.

14. Le procédé selon l'une quelconque des revendications précédentes, **caractérisé en ce que** la cavité intérieure est réalisée dans la partie inférieure de la partie frontale de la monture.

15. Le procédé selon l'une quelconque des revendications précédentes, **caractérisé en ce que** la cavité intérieure se développe tout autour de chaque oculaire respectif de la partie frontale de la monture.

16. Le procédé selon l'une quelconque des revendications précédentes, **caractérisé en ce que** la cavité intérieure (22b, 122b) est réalisée dans la zone de la partie frontale (16, 116) de la monture de lunettes où se trouvent les plaquettes (21, 23, 121, 123).

17. Le procédé selon l'une quelconque des revendications précédentes, **caractérisé en ce que** la cavité intérieure (20, 120) se développe à partir d'un point intermédiaire de la partie (16, 116, 117, 119) respective des lunettes.

18. Le procédé selon l'une quelconque des revendications précédentes, **caractérisé en ce que** la cavité intérieure (20, 120) se développe à partir d'un point central de la partie (16, 116, 117, 119) respective des lunettes.

19. Le procédé selon l'une quelconque des revendications précédentes, **caractérisé en ce que** la cavité intérieure (20, 120) se développe à partir du pont (15, 115) de la partie frontale (16, 116) des lunettes.

20. Le procédé selon l'une quelconque des revendications précédentes, **caractérisé en ce que** la cavité intérieure (20, 120) se développe à partir de la surface inférieure du pont (15, 115) de la partie frontale (16, 116) des lunettes.

21. Le procédé selon l'une quelconque des revendications précédentes, **caractérisé en ce que** la cavité intérieure (20, 120) se développe dans au moins deux directions (20a, 20b, 120a, 120b) essentiellement opposées.

22. Le procédé selon l'une quelconque des revendications précédentes, **caractérisé en ce que** la cavité intérieure (20, 120) se développe essentiellement sur toute la largeur du pont de liaison (15, 115).

23. Le procédé selon l'une quelconque des revendications précédentes, **caractérisé en ce que** la cavité intérieure (20, 120) se développe essentiellement sur toute la hauteur du pont de liaison (15, 115).

24. Le procédé selon l'une quelconque des revendications précédentes, **caractérisé en ce que** la cavité intérieure (20, 120) a essentiellement les mêmes dimensions que le pont de liaison (15, 115).

25. Le procédé selon l'une quelconque des revendications précédentes, **caractérisé en ce que** la cavité intérieure (120) comprend une chambre élargie (120') située juste en aval de l'ouverture (124) du point d'injection.

26. Le procédé selon l'une quelconque des revendications précédentes, **caractérisé en ce que** la cavité intérieure (120) comprend une ample chambre (120').

27. Le procédé selon l'une quelconque des revendications précédentes, **caractérisé en ce que** la cavité intérieure (120) comprend une chambre centrale (120') à partir de laquelle se développent une pluralité de canaux (120a, 120b, 122a, 122b) dans les directions de ramifications (116a, 116b, 115a, 115b) respectives de la partie (116) des lunettes.

28. Le procédé selon l'une quelconque des revendications précédentes, **caractérisé en ce que** la cavité intérieure (120) comprend une chambre centrale (120') à partir de laquelle se développent une pluralité de canaux (120a, 120b, 122a, 122b), les canaux (120a, 120b) se développant dans une direction transversale à la partie frontale des lunettes et les canaux (122a, 122b) se développant dans une direction perpendiculaire à cette même partie frontale.

29. Le procédé selon l'une quelconque des revendications précédentes, **caractérisé en ce que** la cavité intérieure a au moins un canal de ramification (122a, 122b) qui se développe dans une direction essentiellement opposée à la direction d'injection du gaz dans la partie des lunettes.

30. Le procédé selon l'une quelconque des revendications précédentes, **caractérisé en ce que** la partie des lunettes comprend une branche latérale (117, 119) de la monture de lunettes.

31. Le procédé selon l'une quelconque des revendications précédentes, **caractérisé en ce que** la cavité intérieure (141, 143) se développe à partir d'un point intermédiaire de la branche latérale (117, 119).

32. Le procédé selon l'une quelconque des revendications précédentes, **caractérisé en ce que** la cavité intérieure (141, 143) se développe à partir d'un point (145, 147) situé dans une zone d'extrémité (119a) à revêtir d'un matériau adéquat (150, 152) vers la zone de liaison à la partie frontale de la monture de lunettes.

33. Le procédé selon l'une quelconque des revendications précédentes, **caractérisé en ce que** le point d'injection (145, 147), qui se trouve dans la zone d'extrémité (119b) à revêtir, est séparé de l'extrémité de la zone à revêtir d'un espace (d) de manière à permettre le développement du canal dans une direction essentiellement parallèle à la direction de développement de la partie (117a, 119a) correspondante.

34. Le procédé selon l'une quelconque des revendications précédentes, **caractérisé en ce que** la cavité intérieure (143) se développe à partir d'un point situé dans une zone (119b) ayant une section réduite ou étroite.
